(19) Europäisches Patentamt
European Patent Office
Office européen des brevets

(11) **EP 3 729 164 B1**

(12) **EUROPEAN PATENT SPECIFICATION**

(45) Date of publication and mention
of the grant of the patent:
**18.02.2026 Bulletin 2026/08**

(21) Application number: **18782795.1**

(22) Date of filing: **10.09.2018**

(51) International Patent Classification (IPC):
*G02B 23/00* (2006.01)    *G02B 23/18* (2006.01)
*H04B 10/112* (2013.01)

(52) Cooperative Patent Classification (CPC):
**G02B 23/00; G02B 23/18; H04B 10/1123**

(86) International application number:
**PCT/IB2018/056874**

(87) International publication number:
**WO 2019/049091 (14.03.2019 Gazette 2019/11)**

(54) **OPTICAL SIGHTING DEVICE WITH OPTICAL COMMUNICATION SYSTEM**

OPTISCHE SICHTVORRICHTUNG MIT OPTISCHEM KOMMUNIKATIONSSYSTEM

DISPOSITIF OPTIQUE DE VISÉE À SYSTÈME OPTIQUE DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.09.2017 CH 11252017**

(43) Date of publication of application:
**28.10.2020 Bulletin 2020/44**

(73) Proprietor: **S-Lux GmbH
6015 Luzern (CH)**

(72) Inventor: **PASQUALI, Alessandro
6826 Riva San Vitale (CH)**

(74) Representative: **PGA S.p.A., Milano, Succursale
di Lugano
Via Castagnola, 21c
6900 Lugano (CH)**

(56) References cited:
**WO-A1-02/073835        FR-A- 1 547 494
US-A- 3 277 303          US-A- 5 770 850
US-A1- 2003 153 387      US-A1- 2015 188 628**

EP 3 729 164 B1

## Description

### FIELD OF THE INVENTION

The present invention relates to the field of optical radiation transmission and to the field of optical devices.

In particular, the present invention relates to an optical sighting device with an optical communication system.

### PRIOR ART

It has been known for some time to use optical sighting devices, and more particularly image magnifiers, used to enlarge portions of the space remotely positioned with respect to the position of the user of the device itself. Inside, such optical devices typically engage at least one magnifying lens, positioned in such a way that the user is presented with an enlarged image with respect to the real aspect that this portion of space takes to the user's eyes, while remaining equally in focus.

The Applicant has observed that often the user of the device needs to establish a communication not only visual with the observed space portion. In particular, in this portion of space there could be a further user with whom the user wishes to speak, or share electronic data. Traditionally this is only possible thanks to the help of portable transceivers that two users can have with them. Such transceiver devices exploit radio spectrum frequencies that are often subject to government concession, and are therefore difficult to obtain. Although free-use transceivers exist, such transceivers have the disadvantage of having a limited range, and are easily audible even by third parties tuning to the same frequency.

There are, however, environments in which the use of radio-frequency transmission systems is controlled or made impossible or by regulations or specific physical conditions. In particular, environments with a potentially explosive atmosphere are subject to the AtEx 2014/34/EU and 99/92/EC standards for the regulation of equipment intended for use in areas at risk of explosion; the directive is aimed at manufacturers of equipment for use in areas with potentially explosive atmospheres and requires the obligation to certify these products. The legislation is particularly stringent for the radiofrequency communications sector.

Optical sighting devices are known from FR1547494A and from US3277303A. US5770850A and WO02073835A1 disclose optical systems being capable of performing a tracking of an optical source.

The object of the present invention is therefore that of describing an optical sighting device which allows solving the drawbacks described above.

### SUMMARY OF THE INVENTION

In order to allow a communication between two subjects remotely positioned relative to each other to be established, in particular through an optical device, the Applicant, according to a first aspect, has provided an optical sighting device (1) with an optical communication system (2) according to claim 1.

Said optical sighting device comprising a body provided with at least one front lens (2) adapted in use to at least receive an optical radiation (108), and at least one rear lens or output lens (3), placed in optical communication with the aforesaid front lens (2) and adapted in use to allow a user to visualize a space part or portion sighted through said optical device (1) along at least one main sighting direction defined by a first sighting axis (Y), wherein said optical radiation defines and/or performs a predefined optical path between said front lens (2) and said rear lens or output lens (3); said optical device (1) comprising an optical communication system (10) integrated on or inside said body, comprising at least one optical receiver stage (199) and one optical transmitter stage (99), wherein:

- said optical receiver stage (199) is configured to produce, on at least a first output (10u, 10u') thereof, a replication electrical signal (s'(t)) of a modulating signal of an optical radiation (108r) modulated according to a predefined modulation scheme; and
- said optical transmitter stage (99) is configured to produce, on at least a first output (10u, 10u") thereof, an optical radiation (108r) transmitted with a predefined modulation scheme based on an electrical data signal (s(t)), said optical communication system (10) comprising at least a first input (10i) configured to receive the data electrical signal (s(t)), where said data electrical signal (s(t)) acting as a modulating signal for said optical radiation.

With this solution it is possible to point objects or areas that are very far apart and establish an optical communication with another user, difficult to intercept, and use a single device that does not require authorization for use and which can also be used in environments where the radiofrequency may be dangerous to use and/or subject to strong radio interference.

According to a further non-limiting aspect, in the optical device (1) there is at least one image enlarging element, interposed between said at least one front lens (2) and said at least one rear lens or output lens (3).

According to a further non-limiting aspect, said optical transmitter stage (99) is configured to transmit said optical radiation (108t) with a directive transmission oriented at least along a main transmission axis (X) parallel to said first sighting axis (Y).

According to a further non-limiting aspect, said optical receiver stage (199) is configured to receive said optical radiation with a directive reception window oriented at least along a main reception axis (X) parallel to said first sighting axis (Y).

With these solutions, the user - when pointing a certain area - is sure that in the same area the transmitted and/or received optical radiations will also be concentrated. In particular this is made possible by the strong directivity of the optical transmission of the device according to the invention.

According to the invention, said optical receiver stage (199) of said optical communication system (10) comprises a receiver system (300) having an optically sensitive element (301) provided with a reception area (302) thereof and on which a plurality of photoreceivers (200) is installed, each of said plurality of photoreceivers (200) being able to produce said replication electrical signal (s(t)), wherein said plurality of photoreceivers (200) achieve a reception area (302) adapted to acquire at least one image in which an optical radiation intensity variation (Ir(t)) is present, transmitted by a modulated photoemitter according to the aforesaid predefined modulation scheme, said reception system (300) comprising means for selecting a part of the reception area (302) formed by the plurality of photoreceivers (200), configured to automatically select the part of the reception area (302) in which the optical radiation intensity variation (Ir(t)) is present, transmitted by the modulated photoemitter, optionally to cause a signal substantially corresponding to said optical radiation intensity variation (Ir(t)) to be sent towards an optical demodulator stage (201).

With this solution, it is possible to increase the sensitivity level of the device of the invention to optical transmissions which - compared to the average brightness of the environment pointed at - are also of considerably lower power.

According to a further non-limiting aspect, said selection means are means and/or elements comprising at least one operating configuration for tracking said part of the reception area (302) within said reception area (302), wherein, during said tracking, said means may and/or are configured to select further parts of the reception area (302) as areas in which to search for said optical radiation intensity variation (Ir(t)) following a movement of said at least a first sighting axis (Y).

According to a further non-limiting aspect, the optical communication system (10) is installed inside the body of the device (1), in particular in an intermediate position between the front lens (2) and the rear lens or output lens (3).

According to a further non-limiting aspect, said device comprises a reflector element (P) interposed between said front lens (2) and said rear lens or output lens (3), said reflector element (P) being configured to selectively deviate an optical radiation received (108r) from an outer source in a first beam (108r') directed towards said rear lens or output lens (3) along a first direction and in a second beam (108r") directed towards said optical receiver stage (199) along a second direction different from said first direction.

According to a further non-limiting aspect, said at least one reflector element (P) is interposed between said front lens (2) and said rear lens or output lens (3), said reflector element (P) being configured to selectively deviate an optical radiation transmitted by said optical transmitter stage (99) solely towards said front lens (2) and comprising means for denying the transmission of said optical radiation (108t) transmitted from said optical transmitter stage (99) towards said rear lens or output lens (3).

According to a further non-limiting aspect, said predefined modulation scheme is an AM or FM or PWM modulation scheme.

According to a further non-limiting aspect, the predefined modulation scheme is a modulation scheme comprising an amplitude modulation and a frequency modulation.

According to a further non-limiting aspect, said optical modulator stage (99) is an AM modulator stage.

According to a further non-limiting aspect, said optical modulator stage (99) is an FM modulator stage.

According to a further non-limiting aspect, said optical modulator stage (99) is a PWM modulator stage.

According to a further non-limiting aspect, said optical modulator stage (99) comprises at least one modulator stage (101) comprising:

- an input (105) configured to receive in use an electrical signal (s(t)) to be modulated, and
- an output (107) transmitting, towards at least one photoemitter (100), one voltage or current driving signal (v7(t), i7(t)) for which said electrical signal (s(t)) represents a modulating signal, where said at least one photoemitter (100) transmits and/or is configured to transmit an optical radiation (108) with radiation intensity (Ir(t)) variable in accordance with said driving signal (v7(t), i7(t)),

and wherein, between said input and said output of said modulator stage (101) a cascade of a first AM modulator (102) and of a second FM modulator (103) is present, said FM modulator (103) being placed downstream of said AM modulator (102) and having an output thereof directly connected to the output (107) of said modulator stage (101), wherein said AM modulator (102) has an input directly connected to said input (105) of said modulator stage and is directly supplied with said electrical signal (s(t)) to be modulated and wherein said AM modulator (102) has an output on which it generates an intermediate signal (s2(t)) supplied as an input to said FM modulator (103).

According to a further non-limiting aspect, said intermediate signal (s2(t)), powered at input to said FM modulator (103), is a signal adapted to cause a variation in the instantaneous frequency which said driving signal (v7(t)), i7(t)) takes on at the output of the FM modulator (103).

According to a further non-limiting aspect, said optical transmitter stage (99) comprises at least one reference frequency generation stage (109), wherein:

- said reference frequency generation stage (109) is electrically connected to a frequency reference input of said AM modulator (102) and generates at least a first reference frequency (f0) for said AM modulator, or wherein
- said reference frequency generation stage (109) is electrically connected with a frequency reference input of said AM modulator (102) by means of a first output (109f) thereof and is further electrically connected to a frequency reference input of said FM modulator (103) by means of a second output (109s) thereof and generates at least a first reference frequency (f0) for said AM modulator (102) and a second reference frequency (fc) for said FM modulator (103).

According to a further non-limiting aspect, said optical demodulator stage (201) comprises:

- an input (205) adapted to receive in use a voltage or current driving signal (v7'(t), i7'(t)) modulated and generated through a photoreceiver (200) connected thereto and receiving in use said optical radiation (108), and
- an output (207) transmitting an output replication signal (s'(t) for which said electrical signal (s(t)) represents a modulating signal,

and wherein, between said input and said output of said demodulator stage (201) a cascade of a first FM demodulator (203) and a second AM demodulator (202) is present, said FM demodulator (203) being placed upstream of said AM demodulator (202), wherein said AM demodulator (202) has an input directly connected to the output of said FM demodulator (203).

According to a further aspect, the selection means are mechanical and are controlled by a data processing unit.

According to a further non-limiting aspect, the selection means comprise a plurality of movable arms substantially at said reception area (302), optionally wherein said movable arms are controlled by a data processing unit by executing a predefined algorithm for tracking the variation of the optical radiation intensity (Ir(t)).

According to a further non-limiting aspect, said selection means are implemented by software.

According to a further non-limiting aspect, the device comprises a data processing unit configured to perform in an automated manner a predetermined algorithm, which analyzes the signal received by said one or more photoreceivers (200) of the reception area (302) searching for a predetermined signal modulation scheme.

According to a further non-limiting aspect, a tracking algorithm is further executed in the system (300) through which said selection means are configured in order to find if the point of the reception area (302) or on the sub-portion of the reception area (302) in which said radiation intensity variation (Ir(t)) arrives, moves, and in order to perform an automatic pursuit thereof, hence without requiring intervention by of the user.

According to a further non-limiting aspect, the search is without interruption of time continuity.

In particular, in the optical sighting device a sub mask or a similar device is included.

According to a further aspect, a computer program is further described, stored on a non-volatile memory support and adapted to be executed on a data processing unit; said computer program comprising software code portions which when executed on said data processing unit cause the execution of a search and/or selection step of a portion or part of a reception area (302) of an optically sensitive element (301) being part of an optical receiver system (300), wherein in the portion or part of the reception area (302) there is an optical radiation intensity variation (Ir(t)) due to a modulation of an optical radiation according to a predefined optical modulation scheme.

According to a further non-limiting aspect, the computer program is also adapted to cause generation and subsequent transmission of a signal, preferably an electrical one, replicating the optical radiation intensity variation (Ir(t)) and/or said predefined optical modulation scheme.

According to a further non-limiting aspect, said search and/or selection take place by means of an automated movement step of at least one, preferably a plurality, of micro-arms positioned substantially at said reception area (302).

According to a further non-limiting aspect, said search and/or selection take place without interruption.

According to a further non-limiting aspect, the predefined modulation scheme is a modulation scheme comprising an amplitude modulation and/or a frequency modulation.

According to a further non-limiting aspect, said search and/or selection take place through a selective selection of at least one, preferably a plurality of photoreceivers (200) present at the said reception area (302).

For greater clarity, the following definitions apply in the present description.

According to the present invention, optical radiation means an optical radiation comprised in the infrared spectrum and/or in the ultraviolet spectrum and/or in the visible spectrum.

According to the present invention, by direct optical radiation or direct optical transmission, it is intended a transmission of an optical signal in which between a source or photoemitter and a destination or photoreceiver optically opaque obstacles are not interposed and reflections are not present. In other words, in the direct optical radiation or direct optical transmission, the transmission of the signals occurs with said source or photoemitter and the destination or photoreceiver being within the optical range, i.e., mutually visible.

For the purposes of a better understanding of the present invention, the following definitions apply:

- "Transparency" means a feature such that the material under examination may allow a radiation, which is incident thereon, to pass along a preferential direction, independently of the attenuation that such radiation undergoes in the passage through said material.
- "Infrared" means an electromagnetic radiation which has a wavelength approximately from 0.7 $\mu$m to 15 $\mu$m.
- "Visible" or "visible spectrum" means an electromagnetic radiation which has a wavelength approximately from 390 to 700 nm.
- "Ultraviolet" means an electromagnetic radiation which has a wavelength approximately from 400 nm to 10 nm.

## BRIEF DESCRIPTION OF THE DRAWINGS

Some embodiments and some aspects of the invention are described hereinafter with reference to the accompanying drawings, provided only for illustrative and, therefore, non-limiting purposes, in which:

- figure 1 shows a first schematic view of an optical sighting device integrating an optical communication system, in a first embodiment;
- figure 2 shows a second schematic view of the device in figure 1, from the direction of lines II-II;
- figure 3 shows a first schematic view of an optical sighting device integrating an optical communication system, in a second embodiment;
- figure 4 shows a second schematic view of the device in figure 3, from the direction of lines IV-IV;
- figure 5 shows a detail of a portion of the device in figure 3, in which there is an optical radiation received and an optical radiation transmitted;
- figure 6 shows a basic scheme of the optical communication system integrated within the device object of the invention, in a first embodiment;
- figure 7 shows a basic scheme of the optical communication system integrated within the device object of the invention, in a second embodiment;
- figure 8 shows a basic scheme of the optical communication system integrated within the device object of the invention, in a third embodiment;
- figure 9 is a detailed electric diagram of a particular embodiment of the communication system integrated within the device object of the invention;
- Figure 10 illustrates a block diagram of a multichannel receiver demodulating an optical signal with the hybrid AM/FM demodulation, object of the invention;
- figure 11 shows a schematic diagram of a sighting system for an optical radiation source, integrated within the device object of the invention.

## DETAILED DESCRIPTION OF THE INVENTION

The present invention relates to an optical sighting device, preferably of image-enlarging type, which integrates an optical communication system. This optical device can take various configurations, preferably but not limited to binoculars - therefore characterized by the presence of a double eyepiece and two front lenses - that of monocular, a telescope, or sighting optics, for example and not limited to shoulder weapons. Each configuration of the optical image enlarger device will have its own mechanical features typical of its type, for example, by means of sighting optics, a targeting grid and a means for moving the same grid - which are known and which therefore will not be described in detail.

All the above mentioned devices include the presence of a body provided with at least one front lens and a rear lens or optical communication lens with the aforementioned front lens, wherein in the body - between the front lens and the rear lens or output lens - preferably at least one image enlarging element is present, adapted to cause the magnification of the image captured through the front lens. This magnification can be fixed or variable.

In the accompanying figures, an optical image enlarging device 1 is shown in the form of binoculars, which comprises a body provided with a first and a second front lens 2 aligned along a same plane and adapted to capture an image in which an optical radiation is present. The first and second front lenses 2 form part of a first and second half-bodies which are joined at a main sighting axis Y of the device 1 with respect to which they rotate in a known manner. The first and second front lenses 2 each have their own axis aligned with the main sighting axis Y of the device 1. On the rear portion of the device 1 there is a pair formed by a first and a second rear lens or output lens 3, each of which receives the optical radiation captured by the respective front lens 2 of its own half-body. For each half-body there is an optical device adapted to cause the magnification of the image captured through the front lens 2, in particular by means of a fixed or variable magnification.

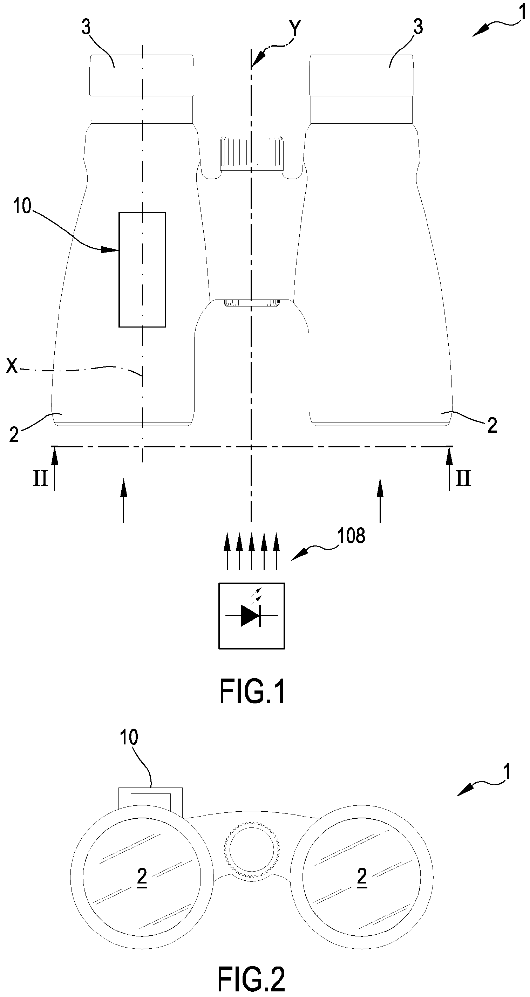

In a first embodiment, shown in figures 1 and 2, the device 1 comprises an optical communication system 10 which is configured to allow reception and/or transmission of an optical radiation 108 modulated according to a predefined modulation scheme. In particular, the optical radiation 108 modulated according to the aforesaid predefined modulation scheme is transmitted and/or received with a directive type transmission and/or a reception, which comprises a preferential direction identified by a reception and/or transmission axis X which, although it may be offset with respect to the main sighting axis Y, is preferably but not limitingly parallel. On the front, therefore on the side of body 1 that integrates the front lenses 2, there is an opening that allows the communication of an optical transducer - a photoemitter or a photoreceiver - with the external environment. Due to this parallelism, the user who points a certain direction through the aforesaid device 1 will have the certainty that also the optical radiation 108 transmitted by the device 1 or received from a source, will respectively be received and/or transmitted mainly along the same direction. The optical radiation may be in the range of visible wavelengths and/or in the infrared and/or ultraviolet.

The modulation of the optical radiation 108 possibly transmitted by the optical communication system 10 takes place on the basis of a modulating data signal s(t); this data signal, preferably but not limitedly, comprises an audio signal. Suitable input means allow the connection of a data source to the optical communication system 10. Such input means may be a jack connection or a wireless radio communication stage.

The optical communication system 10 in the first embodiment is installed outside the body of the device 1, with a solution that also allows the installation of the optical communication system 10 on binoculars that originally had no binoculars. Preferably, but not limitedly, as illustrated in figure 2, the optical communication system 10 is installed above one of the two half-bodies of the device 1; however, the device 1 may comprise two optical communication systems 10, also independent, preferably but not limitedly installed each one above the respective half-body.

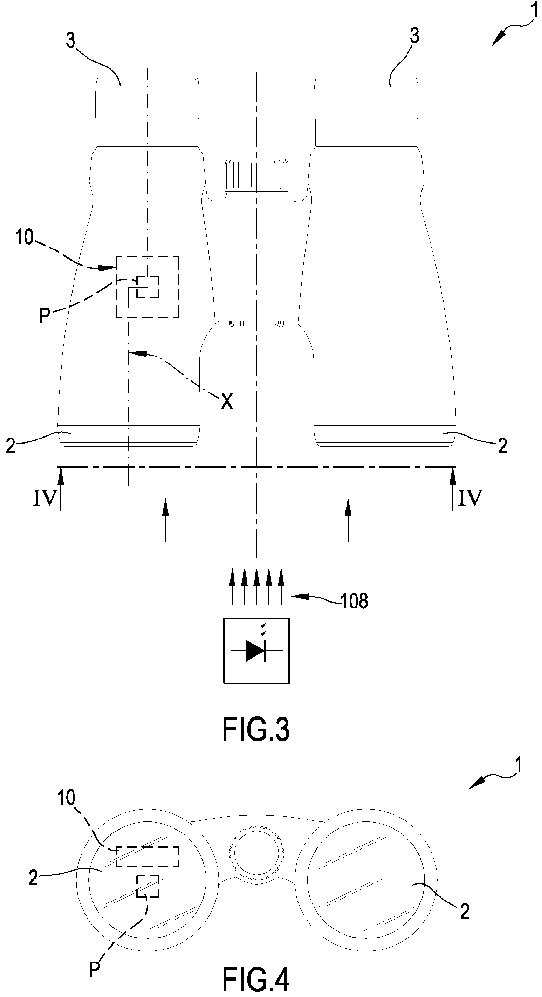

Figure 3 and figure 4 schematically show an alternative embodiment for the device 1 object of the invention. In the embodiment in figures 3 and 4, the device 1 has at least one optical communication system 10 installed inside the body, and in particular inside at least the first half-body, in an intermediate position between the front lens and the rear lens or output lens. The remaining features of the second embodiment of the device 1 shown in figures 3 and 4 are the same as those of the first embodiment described above and to which reference shall be made. With the installation inside the body, the optical communication system 10 is well insulated from the external environment and the assembly of the device 1 with the optical communication system 10 thus becomes particularly susceptible of being used in hostile environments such as example and not limited to in the rain.

In particular, when installed inside the body, as in the case of the second embodiment described herein, the optical communication system 10 is aligned in such a way as to receive part of the optical radiation 108 which travels the optical path 11 between the front lens and the rear lens or output lens 3.

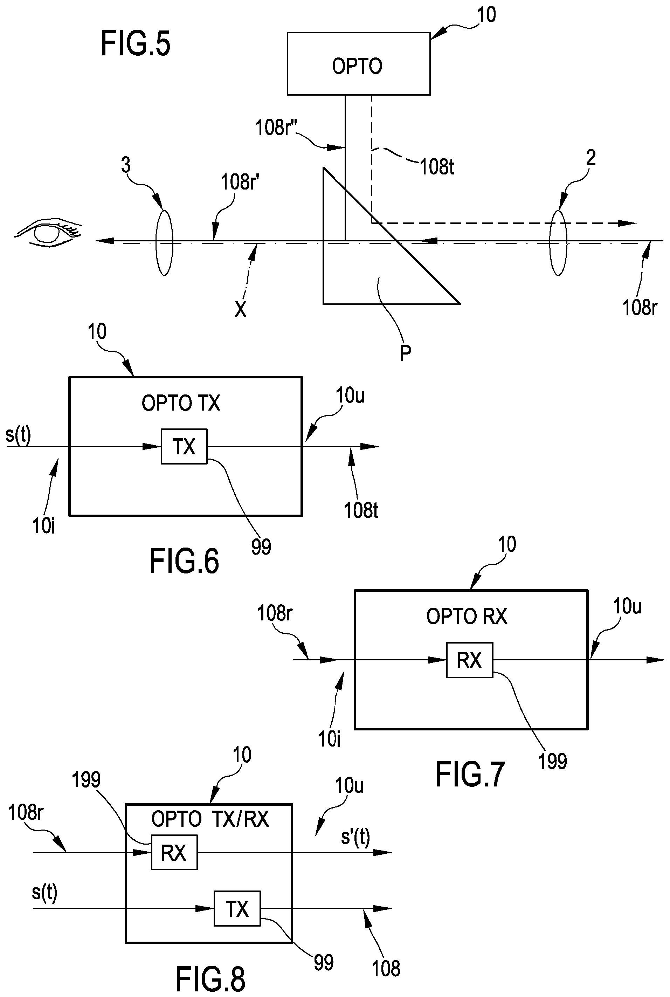

More particularly, as shown in figure 5, inside one of the two half-bodies, at least one reflector element P is present, for example and not limited to a prism shape, interposed between the front lens 2 and the rear lens or output lens 3, capable of splitting the optical radiation 108r received in a first and a second beam. In particular, as shown in figure 5, the received optical radiation 108r is transmitted by a source and its beam first meets the front lens 2, and subsequently the reflector element P. Part of the received optical radiation 108r is diverted towards the optical communication system 10 forming a second beam 108r'' aligned along a first direction; part of the received optical radiation 108r is allowed to continue towards the rear lens or output lens 3, forming a first beam 108l' aligned along a second direction other than the first direction. In a particular embodiment, the first direction is at least partly orthogonal to the sighting axis Y.

Advantageously, the Applicant has noted that this configuration is particularly useful because it allows the user - if the optical radiation is in the visible spectrum - to correctly point the source of the received optical radiation 108r by observation thereof, and then receive an appropriate signal establishing for example a two-way communication.

A further feature of the reflector element P is that it has the feature of allowing a selective passage of the optical radiation towards the rear lens or output lens 3, such that only the received optical radiation 108r, which is therefore received along a first orientation direction parallel to the axis X, is transmitted to the rear lens or output lens 3. Differently from this condition, an optical radiation 108t transmitted by the optical communication system 10 on the reflector element P, preferably but not limited along the aforementioned first direction, is not reflected towards the rear lens or output lens 3, but is transmitted along the direction parallel to the aforesaid axis X, towards the front lens 2, with a percentage ideally equal to 100%, excluding power losses due to the transit of the optical radiation 108t against or within the said reflector element P. Due to this peculiarity, the optical communication system 10 can transmit radiations with even large powers without the risk of damaging the eye of the user of device 1. The optical communication system 10 is firmly fixed to the reflector element P in such a way as to prevent respective movements from leading to a movement and/or misalignment of the optical beam transmitted towards the front lens 2.

The optical communication system 10 according to the invention integrates an optical transmitter stage and an optical receiver stage, thus ensuring in the latter case to make the device 1 adapted to establish an optical communication of the bidirectional type. The configurations of the optical communication system 10 described below apply equally to both the first and second embodiments of the device 1. In particular, the optical transmitter stage integrates, to produce the transmitted optical radiation 108t, one or more photoemitters, while the optical receiver stage integrates, to allow decoding the replication s'(t) of the data signal s(t) from the optical radiation 108r received, a plurality of photoreceivers. The type of photo-emitter and of photoreceiver as such is of known type, but conveniently they must be configured in such a way as to operate in conditions as linear as possible. Preferably, the photoemitter is an LED or SLED diode, and may conveniently be a diode whose passband is higher than the passband of the signal s(t) to be transmitted. For example, the LED diode may be a Gallium Nitride diode.

As illustrated in figure 6, if the optical communication system 10 integrates a single optical transmitter stage 99, the electrical data signal s(t), which constitutes the modulating signal for the optical radiation 108t transmitted by it, is placed on an input 10i of the optical communication system 10, directly connected to the optical transmitter input 99, from which an optical radiation 108t exits which is transmitted in output 10u from the optical communication system 10.

As illustrated in figure 7, if the optical communication system 10 integrates a single optical receiver stage 199, the electrical data replication signal s'(t), ideally coinciding with the electrical data signal s(t) transmitted by the optical radiation source, and which constitutes the modulating signal for the optical radiation 108r received in use by the device 1, is demodulated by the receiver stage and transmitted on an output 10u of the optical communication system 10. This optical communication system 10 therefore receives the received optical radiation 108r at its input 10i.

As illustrated in figure 8, if the optical communication system 10 integrates an optical transmitter stage 99 and an optical receiver stage 199, the electrical data signal s(t), which constitutes the modulating signal for the optical radiation 108t transmitted by it, is placed on a first input 10i' of the optical communication system 10, in direct connection with the optical transmitter input 99, from which an optical radiation 108t exits which is transmitted at the output 10u by the optical communication system 10, while the electrical data replication signal s'(t), ideally coinciding with the electric data signal s(t) transmitted by the optical radiation source, and which constitutes the modulating signal for the optical radiation 108r received in use by the device 1, is demodulated by the receiver stage and transmitted on an output 10u of the optical communication system 10.

As already mentioned in the preceding description portion, the optical communication system 10 object of the invention is advantageously configured to operate with an optical radiation modulated according to a predefined scheme.

This scheme is for example an AM or FM or PWM modulation scheme or a hybrid modulation scheme, and in particular it can be a modulation scheme which integrates and/or includes amplitude modulation and a frequency modulation. With this terminology it is therefore intended that the optical transmitter stage 99 or the optical receiver stage 199 and the optical transceiver stage all operate, in reception, in transmission and in the case of the optical transceiver, with a precise modulation and/or demodulation scheme.

When the optical transmitter stage 99 and/or the optical receiver stage 199 operate according to a predefined AM modulation/demodulation scheme, the data signal s(t) used to generate the transmitted optical radiation 108t will be used to modulate the amplitude of the optical radiation, preferably but not limited in such a way as to never reduce the minimum value below a predetermined threshold; the replication data signal s'(t) will be produced on the output of the respective stage according to the amplitude demodulation of the received optical radiation 108r. Advantageously, the minimum intensity threshold of the optical radiation is designed in such a way as to never reduce too much the power transmitted to the photoemitter of the same stage, which in particular when photoemitter operates advantageously in linearity conditions with consequent low distortion.

When the optical transmitter stage 99 and/or the optical receiver stage 199 operate according to a predefined FM modulation/demodulation scheme, the data signal s(t) used to generate the transmitted optical radiation 108t will be used to modulate the frequency of the optical radiation; the replication data signal s'(t) will be produced on the output of the respective stage according to the frequency demodulation of the received optical radiation 108r.

When the optical transmitter stage 99 and/or the optical receiver stage 199 operate according to a predefined modulation/demodulation scheme of the PWM type, the data signal s(t) used to generate the transmitted optical radiation 108t will be used to modulate the amplitude of the optical radiation pulse; the replication data signal s'(t) will be produced on the output of the respective stage according to the pulse width demodulation of the received optical radiation 108r.

A particular configuration of the optical communication system 10 integrated in the device 1 alternately to the previously described AM, FM and PWM configurations integrates an optical receiver stage 99 and/or an AM/FM hybrid modulation transmitter stage 199, with the peculiar features described below.

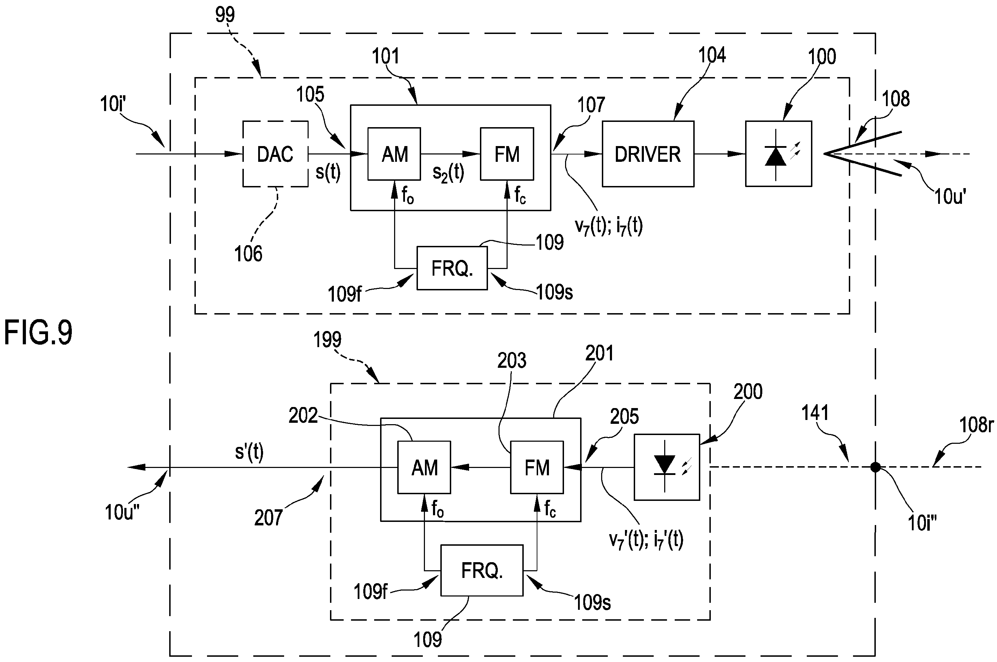

As shown in figure 9, the data signal s(t) before being transmitted to a photoemitter 100 which preferably though not in a limiting manner comprises an LED diode, is subjected during transmission to a modulation step performed by a modulator stage 101 of analog and hybrid type. In a transmission module 99, which comprises the photoemitter 100, the modulator stage 101 comprises a plurality of modulators in series adapted to perform said hybrid modulation, and in detail, starting from its input 105 - preferably but not limitedly directly connected with a first input 10i' of the optical communication stage 10, on which it receives the data signal s(t), it first comprises an AM modulator 102 directly supplied from the aforesaid input 105, and a FM modulator 103 placed in series with the AM modulator 102 and directly supplied therefrom. The output 107 of the modulator stage 101 supplies an input of a driver stage 104 for said photoemitter 100.

In particular, the output 107 of the modulator stage 101 produces a voltage signal v7(t) or current signal i7(t) which is supplied through the driver 104 to the photoemitter 100. In particular if the photoemitter 100 is made from one or more LED diodes 100, it was found that the brightness of the diode is proportional to the voltage or current provided thereto as input. More in detail, the LED diode or generally the photoemitters 100 must be photoemitters whose light intensity curve of the voltage or current supplied thereto in input must not be constant. More preferably, but not limiting, the light intensity curve of the voltage or current is substantially of linear type.

The voltage signal v7(t) or the current signal i7(t) produced as an output 107 from the modulator stage 101 are analog signals correlated with the data signal s(t) and, when supplied to the photoemitter 100, they produce a variation of the brightness and more generally of the optical radiation intensity Ir(t) of the optical beam 108 transmitted by the photoemitter proportional to the variation of voltage or current, respectively of the voltage signal v7(t) or of the current signal i7(t).

More particularly, once the input signal s(t) has been given to the AM modulator 102, such AM modulator 102 produces as an output an intermediate signal s2(t) that assumes the following form:

$$s_2(t) = s(t)\sin(2\pi f_0 t)$$

Where $f_0$ is the carrier frequency of the AM modulation.

The FM modulator 103 attains a frequency modulation, such that its instantaneous frequency assumes the form:

$$f_i(t) = fc + k_f s_2(t)$$

wherein fc is the carrier frequency of the FM modulation.

The output signal v7(t) or i7(t) will therefore have the following form

$$A cos\left[\left(2\pi f_c + 2\pi k_f s_2(t)\right)t\right]$$

The two carrier frequencies f0 and fc respectively of the AM or FM modulation are actual predetermined values, which nevertheless can be modified by the user according to a technique that is known and hence not described herein. Conveniently in the device, object of the invention, a frequency generator 109 is also present, provided with a first output 109f supplying the AM modulator and a second output 109s supplying the FM modulator respectively with a sinusoidal frequency signal $f_0$ and with a cosinusoidal frequency signal fc. Such solution should be intended as non-limiting, since it is possible to make the device, object of the invention, in a manner such that the frequency generator 109 has a single output directed towards both the AM modulator 102 and the FM modulator 103, then giving the latter the task of generating the frequency the cosinusoidal signal with frequency fc based on the sinusoidal signal with frequency $f_0$ generated by the frequency generator 109. The Applicant has found that the carrier frequency fc can also be zero. In such case, the hybrid modulation takes the form of a direct modulation. In order to avoid significant distortions of the optical beam 108 in terms of brightness variation or more in general of optical radiation intensity Ir(t), the Applicant has observed that the band occupied by the brightness variation signal Ir(t), and even more so the voltage signal v7(t) or current signal i7(t) supplied to the photoemitter 100, must not exceed its maximum pass band. The optical radiation may in particular have a continuous part, independent of the driving signal, and a variable part direct function of the driving signal; the variable part may have an amplitude that in absolute value is less than the amplitude of the continuous part.

The Applicant has observed that the data signal in input can also be a numerical signal. In such case, the Applicant has conceived an embodiment which comprises an digital/analog converter 106 stage, placed between the input of the device and the input 105 of the modulator stage 101, which provides to transform the input data signal into an analog signal suitably adapted in order to be analogically modulated through the modulators AM 102 and FM 103, as previously described. Since the digital/analog converter 106 relates to the further embodiment and therefore with respect to the embodiment shown is optional, in figure 9 such a digital/analog converter 106 is shown with a broken line.

The Applicant has observed that the optical beam 108 obtained by means of the hybrid modulation as previously described is particularly adapted for being received even over indirect paths, i.e. by means of reflection or refraction caused by surfaces that are even micrometrically incoherent, such as a wall or the like.

On the receiving side, the received optical radiation 108r is sent by a modulated source towards a receiver device 199, which comprises at least one photoreceiver 200 which receives the reflected optical beam 108 and which transmits a voltage or current signal v7'(t) or i7'(t) - in accordance with the intensity as a function of time of said optical beam 108 - towards a demodulator stage 201, which performs a step of hybrid demodulation of the received voltage or current signal. The demodulator 201 comprises a cascade of an FM demodulator 203 and of an AM demodulator 202, wherein the input of the Am demodulator 202 is directly supplied by the output of the FM demodulator 203. The FM demodulator 203 has an input 205 on which said voltage or current signal v7'(t) or i7'(t) is supplied. As in the case of the transmission side, between the FM demodulator and the photoreceiver 200 a driver can be present that is adapted to generate the voltage or current signal v7'(t) or i7'(t), termed "driving signal" for the purposes of the present invention, in a manner such to separate the first continuous component I from the second variable component of the optical radiation. The output 207 of the AM demodulator on which the replication signal s'(t) is reproduced is preferably but not limitedly directly connected to a second output 10u' of the optical communication system 10.

As in the case of the modulation side, also the receiver device 199 comprises a frequency generator 109, provided with a first output 109f supplying the AM demodulator and a second output 109s supplying the FM demodulator respectively with a sinusoidal frequency signal $f_0$ and with a cosinusoidal frequency signal fc. Such solution should be intended as non-limiting, since it is possible to make the device, object of the invention, in a manner such that the frequency generator 109 has a single output directed towards both the AM demodulator 202 and the FM demodulator 203, then giving the latter the task of generating the frequency the cosinusoidal signal with frequency fc based on the sinusoidal signal with frequency $f_0$ generated by the frequency generator 109. The Applicant has found that the carrier frequency fc can also be zero. In such case, the hybrid demodulation takes on the form of a direct demodulation.

The demodulator stage 201, as with the modulator stage 101, can be made with hardware or with mixed hardware-software structure, or as SDR, hence only software, without such difference constituting a limitation for the purpose of the present invention. The receiver device 199 then produces, on its output 199u, a replication s'(t) of the input signal s(t) at the transmitter side.

In particular, the voltage or current signal v7'(t) or i7'(t) generated by the photoreceiver is first transmitted towards the FM demodulator 203 which extracts a copy s2'(t) of the intermediate signal s2(t) that is supplied to the input of the AM demodulator 202, which performs the actual conversion towards the replication signal s'(t) of the input signal s(t) at the transmitter side.

Advantageously, the Applicant has observed that the hybrid modulation and demodulation performed as described above are particularly adapted for being used for transmitting an analog data signal, even with transmission by means of reflections, since it has been proven that the replication s'(t) of the data signal s(t) at the transmitter side is received without audible distortions, or in any case without distortions that are capable of significantly worsening the quality of the signal.

A further embodiment of the receiver 199, object of the invention, is advantageously described in the following portion of the text. Such embodiment of the receiver 199 is conceived so as to allow the reception of optical signals 108 over multiple channels simultaneously, hence realizing a multichannel receiver for optical signals.

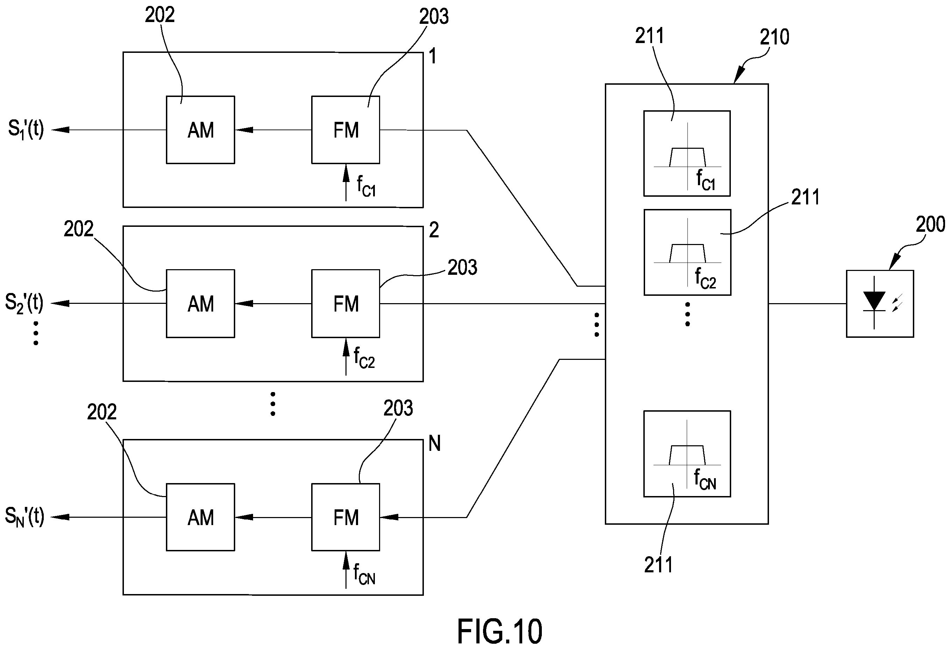

The multi-channel optical receiver described below and shown in figure 10 comprises a plurality of demodulator stages 201 arranged in parallel and having the same structure as the single-channel receiver 199 described above, to which reference shall be made, but also integrates a filtering stage 210. This filtering stage is positioned between the photoreceiver 200 and the demodulator stage 201, and is designed to cause the transmission of only part of the voltage v7'(t) or current i7'(t) signal at the output of the photoreceiver, with a subdivision by frequency bands.

In particular, the Applicant has observed that conveniently the filtering stage 210 can integrate one or more band-pass filters 211 each centered on its own central frequency ideally coinciding with each of the carrier frequencies fc of the FM modulator 103. In this way, the filtering stage performs a procedure for selecting which sub-parts of the spectrum to transmit to the various demodulator stages 201, such that each of them can decode its own channel independently of the remaining demodulator stages 201. The filtering stage 210 can be realized in hardware, partially software or totally software.

Such receiver device 199 is well-integrated in a transmission system that comprises a plurality of transmitters as described above, in which each i-th transmitter has its own FM modulator 103 operating with a carrier frequency $f_{ci}$ different from the others, and in which the receiver 199 comprises a filtering stage 210 adapted such that it can be tuned or in any case divide the N carrier frequencies $f_{ci}$ i=1... N of each of the transmitters towards one or more of the demodulators FM 203.

As an alternative to the above-proposed solution, the multichannel receiver described herein can be provided with a filtering stage 210 installed between the FM demodulator 203 and the FM demodulator 202, operating under the same principle as the preceding case. Nevertheless, in such case, the differentiation of the audio channels will only be given by the distinction of the carrier frequencies f0 of the various modulators AM 103 on the transmitter side, hence taking care to maintain constant the carrier frequency fc of the modulators FM 103 of the system.

The filtering stage 210 may comprise selection means adapted to allow the manual selection of a sub-part, preferably one sub-part, of the various carrier frequencies fc, so as to select for example only one channel. Such solution is particularly advantageous for the applications of multilingual signal diffusion, since each i-th transmitter can employ its own carrier frequency $f_{ci}$ i=1, ... , N in the system in order to carry for example and not limited to a particular audio signal leaving the user the possibility to select the channel of interest by means of known selection means.

The method which is therefore carried out by the present invention, on the transmitter side, comprises a step of supplying a data signal s(t) to a modulator stage 101 through a first input 10i'; the modulator stage 101 performs a step of modulation first comprising a step of amplitude modulation of said analog signal s(t) in order to produce, as an output from an AM modulator 102 thereof, an amplitude-modulated intermediate signal s2(t) and further comprising a step of supplying the intermediate signal s2(t) to a FM modulator 103 in order to obtain, as an output, a voltage or current signal v7(t), i7(t) supplied as an input to a photoemitter 100, wherein the step of supplying the voltage or current signal v7(t), i7(t) to said photoemitter 100 generates an optical radiation intensity variation Ir(t) proportional to the voltage or current signal v7(t), i7(t) and transmits it as a transmitted optical radiation 108t on the first output 10u' of the optical communication stage 10. Analogously, on the receiver side, said method comprises a step of receiving an optical beam 108 carrying electronic data modulated herein according to a predetermined modulation, wherein in the step of receiving at least one photoreceiver 200 it generates a voltage or current signal v7'(t), i7'(t) of amplitude proportional to the received optical radiation intensity, in particular light intensity Ir(t), and wherein there is a step of demodulation performed by at least one demodulator stage 201 of a receiver 199 in which the at least one demodulator stage 201 first of all performs a frequency demodulation of said voltage or current signal v7'(t), i7'(t) generated by the at least one photoreceiver in order to produce an intermediate signal s2'(t) and wherein said method comprises a step of supplying said intermediate signal s2'(t) to the input of an amplitude demodulator 102 of said receiver 199, which performs an amplitude demodulation in order to extract an analog data signal s(t) from said intermediate signal s2'(t).

In the method mentioned above, both in transmission and in the receiving step, the frequency and amplitude modulations respectively are sequential, and in particular: during transmission, the frequency modulation follows the amplitude modulation, while in the receiving step the amplitude demodulation follows the frequency demodulation. During transmission, the intermediate signal s2(t) contributes to defining an instantaneous frequency of a signal which will be the object of a frequency modulation by means of the aforesaid intermediate signal s2(t).

The Applicant has observed that, in the optical domain, the hybrid modulation formed by a cascade of a FM modulation of a signal previously modulated in AM renders the receivers particularly sensitive to detecting the presence of a power signal, even a very weak one.

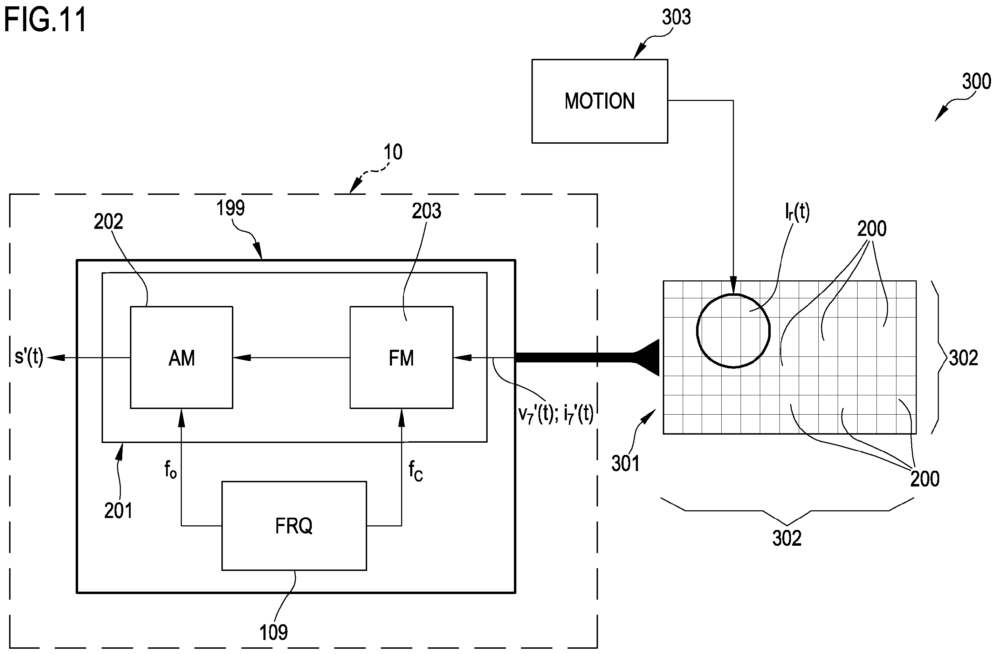

The Applicant has conceived a reception system 300, comprising a receiver 199 according to what described above, which is shown in figure 11. Such a reception system 300 therein integrates an optically sensitive element 301 provided with its own reception area 302 and on which a plurality of photoreceivers 200 are installed. In this case, although this solution does not have to be considered as a limitation, preferably the photoreceivers 200 are of the CCD type, and form a matrix in the reception area 302. The reception area 302 therefore has relative size and can be adapted to acquire an image, as well as the optical radiation intensity variation, in particular light intensity Ir(t) transmitted by a modulated photoemitter. The assembly of the photoreceivers can therefore achieve a reception area 302 of a camera, of a video camera or of binoculars.

The receiver 199 in this case comprises means and/or elements for selecting a part of the reception area 302 formed by the plurality of photoreceivers 200. Said selection means 303 are in particular configured to select part of the reception area 302 in which there is a variation of optical radiation intensity, in particular light radiation intensity Ir(t) transmitted by a modulated photoemitter.

In first example not covered by the claims, the selection means are mechanical, e.g. attained through micro-arms, lying at the reception area and positioned substantially at the reception area 302, while in a non-limiting embodiment the selection means are attained via software; in both cases, a predetermined algorithm analyzes the signal received by the photoreceivers 200 of the reception area 302 in order to find a predetermined signal modulation scheme. The search can occur over all the photoreceivers 200 of the area or over a part thereof by means of the selection means. When such selection means are moved, electronically or mechanically, on the sub-portion of the area in which a signal is received with light variation Ir(t) transmitted by a modulated photoemitter, the selection means perform a spatial filtering over the reception area 302 which allows more greatly isolating the light variation Ir(t) transmitted by said modulated photoemitter from the optical noise otherwise captured on the remaining portion of the reception area 302; the light variation Ir(t) transmitted by the photoemitter, which is an indication of an optical beam 108 modulated with the previously-described hybrid modulation, through the photoreceiver or the photoreceivers 200 of the abovementioned sub-portion is transformed into an electrical voltage or current signal v7'(t), i7'(t) which is sent as an input to a receiver as described above in a manner such to subsequently proceed with an extraction of the signal s(t) of interest by a demodulation thereof.

According to a particular aspect, in the system 300, a tracking algorithm is also performed through which the selection means are configured in order to find, preferably without interruption of time continuity, if the point of the reception area 302 or on the sub-portion of the reception area 302, in which said light variation Ir(t) arrives, moves, and in order to perform an automatic pursuit thereof, hence without requiring intervention by the user. Preferably, although not limited, said automatic tracking occurs without interruption. A data processing unit is conveniently configured to perform the aforementioned tracking algorithm, for example causing movement of the micro-arms.

Therefore, a computer program is executed on the data processing unit which is stored on a non-volatile memory support and adapted to be executed on a data processing unit; said computer program comprises software code portions which when executed on said data processing unit cause the execution of a search and/or selection step of a portion or part of a reception area 302 of an optically sensitive element 301 being part of the optical receiver system 300, wherein in the portion or part of the reception area 302 there is an optical radiation intensity variation Ir(t) due to a modulation of an optical radiation according to a predefined optical modulation scheme. In particular, the computer program is configured to cause generation and subsequent transmission of a signal, preferably an electrical one, replicating the optical radiation intensity variation Ir(t) and/or said predefined optical modulation scheme. In said search and/or selection the program causes an automated movement step of at least one, preferably a plurality, of micro arms positioned substantially at said reception area 302, in particular causing a search and/or selection that can take place without interruption.

In detail, the predefined modulation scheme is a modulation scheme comprising an amplitude modulation and/or a frequency modulation. Alternatively to the movement of micro arms, said search and/or selection take place through a selective selection of at least one, preferably a plurality of photoreceivers 200 present at the said reception area 302.

The Applicant has in particular observed that when such system 300 is installed on a camera, on a video camera or on binoculars - in particular if provided with enlarging or telephoto lenses - it can easily happen that during the pointing operation especially if manual the sought-after point can be subjected to movements over the reception area 302 due to accidental movements of the pointing axis of the lens or objective. Advantageously, the applicant has realized that by implementing the tracking algorithm on the video camera, camera or binoculars integrating the system 300, it is advantageously possible to transform the aforesaid camera, video camera or binoculars into a reception device for receiving signals transmitted over an optical channel and modulated by means of hybrid FM and AM modulation, which, even if able to capture an image in the visible spectrum, is also simultaneously able to receive a signal transmitted by an optical source present in said image, even if the source itself is - to the human eye - barely visible and/or even if the modulation of the brightness of the source might appear non-existent to the human eye. For this particular aspect, the Applicant has observed from its tests that an audio signal can be received even at a considerable distance, up to several kilometers above all in non-foggy or cloudy weather conditions, through the light emission of one or more LEDs of conventional type, which, even if modulated, to the human eye appear to entirely lack light intensity variation.

In other words, a data signal and in particular an audio signal can be modulated on a photoemitter 100 or on multiple photoemitters 100 adapted for example to illuminate an environment, with a relative modulation of very low light intensity, even lower than 1/1000, without losing data and therefore without the human eye being able to perceive such modulation, not only due to its speed but also through the very limited variation of the amplitude between modulated or non-modulated signal peaks.

Advantageously, for the second embodiment of the device where the optical communication system is integrated inside the body of the same device, the reception system 300 is conveniently installed so as to work on the optical radiation beam directed towards the optical communication system 10 itself, therefore on said second beam 108r" aligned along the first direction. In particular, it has been realized that with the installation as described above, the first beam 108 which reaches through the rear lens or output lens to the user's eye remains unaltered, to the advantage of the optical quality of the image perceived by the user.

Regarding the specific case of AM/FM hybrid modulation, in particular the Applicant has observed that it is convenient to allow the photoemitter 100 - in the absence of modulation - to have a constant non-zero light intensity I, on which a hybrid modulated signal is superimposed. In other words, the light radiation intensity Ir(t) is given by two components according to the following formula:

$$Ir(t) = I + kV_7(t)$$

where the first component I is the constant component and the second component $kV_7(t)$ is that which follows the abovementioned law *Acos* $[(2\pi f_c + 2\pi k_f s_2(t))t]$. In order to avoid zero transitions, in particular if the photoemitter is an LED diode, and in particular to make the aforementioned diode work in a linearity zone so as to prevent modulation distortions, the portion $kV7(t)$ should preferably but non limited have an absolute value that is always kept lower than the absolute value of the continuous component I. This task is advantageously carried out by the driver stage 104. The Applicant has also considered that operating the driver stage 104 in accordance with that specified above allows preventing the risk that, in the absence of signal s(t), the photoemitter 100 is driven with a zero or in any case overly low voltage such that it cannot be turned on or in any case not visibly turned on.

Finally, the Applicant has found that the previously described photoemitter 100 may be either coherent - "coherent" meaning a monochromatic photoemitter as a LASER could be, or incoherent - "incoherent" meaning a photoemitter emitting a polychromatic optical beam. The Applicant in any case has observed that the use of coherent photoemitters improves the reception performances with respect to what could be obtained with an incoherent photoemitter.

The data processing unit can be a processor of general purpose type, especially configured through said software or firmware program in order to perform one or more parts of the method identified in the present invention, or be an ASIC or dedicated processor, specifically programmed for performing at least part of the operations of the method or process of the present invention.

It is finally apparent that additions, modifications or variations obvious to a person skilled in the art may apply to the object of the present invention, without thereby departing from the scope of protection provided by the accompanying claims.

**Claims**

1. Optical sighting device (1) with an optical communication system, said optical device comprising a body provided with at least one front lens (2) adapted in use to at least receive an optical radiation (108), and at least one rear lens or output lens (3), placed in optical communication with the aforesaid front lens (2) and adapted in use to allow a user to visualize a space part or portion sighted through said optical device (1) along at least one main sighting direction defined by a first sighting axis (Y), wherein said optical radiation defines and/or performs a predefined optical path between said front lens (2) and said rear lens or output lens (3);

   said optical device (1) comprising an optical communication system (10) integrated on or inside said body, comprising at least one optical receiver stage (199) and one optical transmitter stage (99), wherein:

   - said optical receiver stage (199) is configured to produce, on at least a first output (10u, 10u') thereof, a replication electrical signal (s'(t)) of a modulating signal of an optical radiation (108r) modulated according to a predefined modulation scheme; and
   - said optical transmitter stage (99) is configured to produce, on at least a first output (10u, 10u") thereof, an optical radiation (108r) transmitted with a predefined modulation scheme based on an electrical data signal (s(t)), said optical communication system (10) comprising at least a first input (10i) configured to receive the electrical data signal (s(t)), said electrical data signal (s(t)) acting as a modulating signal for said optical radiation;

   the optical sighting device (1) being **characterized in that** said optical receiver stage (199) of said optical communication system (10) comprises a receiver system (300) having an optically sensitive element (301) provided with a reception area (302) thereof and on which a plurality of photoreceivers (200) is installed, of said plurality of photoreceivers (200) being able to produce said replication electrical signal (s(t)), wherein said plurality of photoreceivers (200) achieves a reception area (302) adapted to acquire at least one image in which an optical radiation intensity variation (Ir(t)) transmitted by a modulated photoemitter, according to the aforesaid predefined modulation scheme is present, said reception system (300) comprising means for selecting a part of the reception area (302), configured to automatically select the part of the reception area (302) in which the optical radiation intensity variation (Ir(t)) transmitted by the modulated photoemitter is present, optionally to cause a signal substantially corresponding to said optical radiation intensity variation (Ir(t)) to be sent towards an optical demodulator stage (201).

2. Device according to claim 1, further comprising at least one image enlarging element, interposed between said at least one front lens (2) and said at least one rear lens or output lens (3).

3. Device according to claim 1 or claim 2, wherein said optical transmitter stage (99) is configured to transmit said optical radiation (108t) with a directive transmission oriented at least along a main transmission axis (X) parallel to said first sighting axis (Y) and/or wherein said optical receiver stage (199) is configured to receive said optical radiation with a directive reception window oriented at least along a main reception axis (X) parallel to said first sighting axis (Y).

4. Device according to claim 1, wherein said selection means are means and/or elements comprising at least one operating configuration for tracking said part of the reception area (302) within said reception area (302), wherein, during said tracking, said means may and/or are configured to select further parts of the reception area (302) as areas in which to search for said optical radiation intensity variation (Ir(t)) following a movement of said at least a first sighting axis (Y).

5. Device according to any one of the preceding claims, comprising at least one reflector element (P) interposed between said front lens (2) and said rear lens or output lens (3), said reflector element (P) being configured to selectively deviate an optical radiation received (108r) from an outer source in a first beam (108r') directed towards said rear lens or output lens (3) along a first direction and in a second beam (108r") directed towards said optical receiver stage (199) along a second direction different from said first direction.

6. Device according to any one of the preceding claims, comprising at least one reflector element (P) interposed between said front lens (2) and said rear lens or output lens (3), said reflector element (P) being configured to selectively deviate an optical radiation transmitted by said optical transmitter stage (99) solely towards said front lens (2) and comprising means for denying the transmission of said optical radiation (108t) transmitted from said optical transmitter stage (99) towards said rear lens or output lens (3).

7. Device according to any one of the preceding claims, wherein said predefined modulation scheme is an AM or FM or PWM modulation scheme, or is a scheme comprising an amplitude modulation and a frequency modulation.

8. Device according to any one of the preceding claims, wherein said optical modulator stage (99) comprises at least one modulator stage (101) comprising:

- an input (105) configured to receive in use an electrical signal (s(t)) to be modulated, and
- an output (107) transmitting, towards at least one photoemitter (100), one voltage or current driving signal (v7(t), i7(t)) for which said electrical signal (s(t)) represents a modulating signal, where said at least one photoemitter (100) transmits and/or is configured to transmit an optical radiation (108) with radiation intensity (Ir(t)) variable in accordance with said driving signal (v7(t), i7(t)),

and wherein, between said input and said output of said modulator stage (101) a cascade of a first AM modulator (102) and of a second FM modulator (103) is present, said FM modulator (103) being placed downstream of said AM modulator (102) and having an output thereof directly connected to the output (107) of said modulator stage (101), wherein said AM modulator (102) has an input directly connected to said input (105) of said modulator stage and is directly supplied with said electrical signal (s(t)) to be modulated and wherein said AM modulator (102) has an output on which it generates an intermediate signal (s2(t)) supplied as an input to said FM modulator (103).

9. Device (99) according to claim 8, wherein said intermediate signal (s2(t)) supplied as an input to said FM modulator (103) is a signal adapted to cause a variation of the instantaneous frequency that said driving signal (v7(t)), i7(t)) takes on at the output of said FM modulator (103).

10. Device according to claim 9, wherein said optical transmitter stage (99) comprises at least one reference frequency generation stage (109), wherein:

- said reference frequency generation stage (109) is electrically connected to a frequency reference input of said AM modulator (102) and generates at least a first reference frequency (f0) for said AM modulator, or wherein
- said reference frequency generation stage (109) is electrically connected with a frequency reference input of said AM modulator (102) by means of a first output (109f) thereof and is further electrically connected to a frequency reference input of said FM modulator (103) by means of a second output (109s) thereof and generates at least a first reference frequency (f0) for said AM modulator (102) and a second reference frequency (fc) for said FM modulator (103).

11. Device according to any one of the preceding claims, comprising an optical demodulator stage (201) having:

- an input (205) adapted to receive in use a voltage or current driving signal (v7'(t), i7'(t)) modulated and generated through a photoreceiver (200) connected thereto and receiving in use said optical radiation (108), and
- an output (207) transmitting an output replication signal (s'(t) for which said electrical signal (s(t)) represents a modulating signal,

and wherein, between said input and said output of said demodulator stage (201) a cascade of a first FM demodulator (203) and a second AM demodulator (202) is present, said FM demodulator (203) being placed upstream of said AM demodulator (202), wherein said AM demodulator (202) has an input directly connected to the output of said FM demodulator (203).

12. Device according to any one of the preceding claims, comprising a data processing unit configured to perform in an automated manner a predetermined algorithm, which analyzes the signal received by said one or more photoreceivers (200) of the reception area (302) searching for a predetermined signal modulation scheme.

**Patentansprüche**

1. Optische Sichtvorrichtung (1) mit einem optischen Kommunikationssystem, wobei die optische Vorrichtung einen Körper umfasst, welcher mit wenigstens einer vorderen Linse (2), welche wenigstens dazu angepasst ist, während einer Verwendung eine optische Strahlung (108) zu empfangen, und wenigstens einer hinteren Linse oder Ausgabelinse (3) bereitgestellt ist, welche in optische Kommunikation mit der zuvor genannten vorderen Linse (2) gesetzt ist und welche dazu angepasst ist, es einem Nutzer während einer Verwendung zu ermöglichen, einen Raumteil oder Abschnitt zu visualisieren, welcher entlang wenigstens einer Hauptsichtrichtung, welche durch eine erste Sichtachse (Y) definiert ist, durch die optische Vorrichtung (1) gesichtet wird, wobei die optische Strahlung einen vordefinierten optischen Weg zwischen der vorderen Linse (2) und der hinteren Linse oder Ausgabelinse (3) definiert und/oder durchführt;

wobei die optische Vorrichtung (1) ein optisches Kommunikationssystem (10) umfasst, welches an oder in dem Körper integriert ist, welcher wenigstens eine optische Empfangsstufe (199) und eine optische Übertragungsstufe (99) umfasst, wobei:

- die optische Empfangsstufe (199) dazu eingerichtet ist, an wenigstens einer ersten Ausgabe (10u, 10u') davon ein elektrisches Reproduzierungssignal (s'(t)) eines Modulationssignals einer optischen Strahlung (108r) zu erzeugen, welche gemäß einem vordefinierten Modulationsschema moduliert worden ist; und
- die optische Übertragungsstufe (99) dazu eingerichtet ist, an wenigstens einer ersten Ausgabe (10u, 10u") davon auf Grundlage eines elektrischen Datensignals (s(t)) eine optische Strahlung (108r) zu erzeugen, welche mit einem vordefinierten Modulationsschema übertragen wird, wobei das optische Kommunikationssystem (10) wenigstens eine erste Eingabe (10i) umfasst, welche dazu eingerichtet ist, das elektrische Datensignal (s(t)) zu empfangen, wobei das elektrische Datensignal (s(t)) als ein Modulationssignal für die optische Strahlung fungiert;

wobei die optische Sichtvorrichtung (1) **dadurch gekennzeichnet ist, dass** die optische Empfangsstufe (199) des optischen Kommunikationssystems (10) ein Empfangssystem (300) umfasst, welches ein optisch sensitives Element (301) aufweist, welches mit einem Empfangsbereich (302) davon bereitgestellt ist und an welchem eine Mehrzahl von Lichtempfängern (200) installiert ist, wobei jeder aus der Mehrzahl von Lichtempfängern (200) dazu in der Lage ist, das elektrische Reproduzierungssignal (s(t)) zu erzeugen, wobei die Mehrzahl von Lichtempfängern (200) einen Empfangsbereich (302) verwirklicht, welcher dazu angepasst ist, wenigstens ein Bild zu erlangen, in welchem eine optische Strahlung-Intensitätsvariation (Ir(t)), welche durch einen modulierten Lichtemitter übertragen worden ist, gemäß dem zuvor genannten vordefinierten Modulationsschema vorhanden ist, wobei das Empfangssystem (300) Mittel zum Auswählen eines Teils des Empfangsbereichs (302) umfasst, welche dazu eingerichtet sind, den Teil des Empfangsbereichs (302) automatisch auszuwählen, in welchem die optische Strahlung-Intensitätsvariation (Ir(t)) vorhanden ist, welche durch den modulierten Lichtemitter übertragen worden ist, optional um ein Signal zu bewirken, welches im Wesentlichen der optische Strahlung-Intensitätsvariation (Ir(t)) entspricht, um in Richtung einer optischen Demodulationsstufe (201) gesendet zu werden.

2. Vorrichtung nach Anspruch 1, ferner umfassend wenigstens ein Bildvergrößerungselement, welches zwischen die wenigstens eine vordere Linse (2) und die wenigstens eine hintere Linse oder Ausgabelinse (3) eingefügt ist.

3. Vorrichtung nach Anspruch 1 oder Anspruch 2, wobei die optische Übertragungsstufe (99) dazu eingerichtet ist, die optische Strahlung (108t) mit einer direktiven Übertragung zu übertragen, welche wenigstens entlang einer Hauptübertragungsachse (X) orientiert ist, welche parallel zu der ersten Sichtachse (Y) ist, und/oder wobei die optische Empfangsstufe (199) dazu eingerichtet ist, die optische Strahlung mit einem direktiven Empfangsfenster zu empfangen, welches entlang wenigstens einer Hauptempfangsachse (X) orientiert ist, welche parallel zu der ersten Sichtachse (Y) ist.

4. Vorrichtung nach Anspruch 1, wobei die Auswahlmittel Mittel und/oder Elemente sind, welche wenigstens eine Betriebskonfiguration zum Verfolgen des Teils des Empfangsbereichs (302) innerhalb des Empfangsbereichs (302) umfassen, wobei die Mittel während dem Verfolgen weitere Teile des Empfangsbereichs (302) als Bereiche auswählen können und/oder zum Auswählen eingerichtet sind, in welchen im Anschluss an eine Bewegung der wenigstens einen ersten Sichtachse (Y) nach der optische Strahlung-Intensitätsvariation (Ir(t)) zu suchen ist.

5. Vorrichtung nach einem der vorhergehenden Ansprüche, umfassend wenigstens ein Reflektorelement (P), welches zwischen die vordere Linse (2) und die hintere Linse oder Ausgabelinse (3) eingefügt ist, wobei das Reflektorelement (P) dazu eingerichtet ist, eine optische Strahlung (108r), welche von einer äußeren Quelle empfangen wird, in einen ersten Strahl (108r'), welcher in Richtung der hinteren Linse oder Ausgabelinse (3) gerichtet ist, entlang einer ersten Richtung und in einen zweiten Strahl (108r"), welcher in Richtung der optischen Empfangsstufe (199) gerichtet ist, entlang einer zweiten Richtung selektiv abzulenken, welche von der ersten Richtung verschieden ist.

6. Vorrichtung nach einem der vorhergehenden Ansprüche, umfassend wenigstens ein Reflektorelement (P), welches zwischen die vordere Linse (2) und die hintere Linse oder Ausgabelinse (3) eingefügt ist, wobei das Reflektorelement (P) dazu eingerichtet ist, eine optische Strahlung, welche durch die optische Übertragungsstufe (99) übertragen worden ist, nur in Richtung der vorderen Linse (2) selektiv abzulenken, und welches Mittel zum Zurückweisen der Übertragung der optischen Strahlung (108t) umfasst, welche von der optischen Übertragungsstufe (99) in Richtung der hinteren Linse oder Ausgabelinse (3) übertragen worden ist.

7. Vorrichtung nach einem der vorhergehenden Ansprüche, wobei das vordefinierte Modulationsschema ein AM- oder FM- oder PWM-Modulationsschema ist oder ein Schema ist, welches eine Amplitudenmodulation und eine Frequenzmodulation umfasst.

8. Vorrichtung nach einem der vorhergehenden Ansprüche, wobei die optische Modulationsstufe (99) wenigstens eine Modulationsstufe (101) umfasst, umfassend:

   - eine Eingabe (105), welche dazu eingerichtet ist, während einer Verwendung ein zu modulierendes elektrisches Signal (s(t)) zu empfangen, und
   - eine Ausgabe (107), welche in Richtung wenigstens eines Lichtemitters (100) ein Spannung- oder Strom-Antriebssignal (v7(t), i7(t)) überträgt, für welches das elektrische Signal (s(t)) ein Modulationssignal repräsentiert, wobei der wenigstens eine Lichtemitter (100) eine optische Strahlung mit einer Strahlungsintensität (Ir(t)), welche in Übereinstimmung mit dem Antriebssignal (v7(t), i7(t)) variabel ist, überträgt und/oder dazu eingerichtet ist, diese zu übertragen,

   und wobei zwischen der Eingabe und der Ausgabe der Modulationsstufe (101) eine Kaskade aus einem ersten AM-Modulator (102) und aus einem zweiten FM-Modulator (103) vorhanden ist, wobei der FM-Modulator (103) nachgelagert zu dem AM-Modulator (102) angeordnet ist und eine Ausgabe davon aufweist, welche direkt mit der Ausgabe (107) der Modulationsstufe (101) verbunden ist, wobei der AM-Modulator (102) eine Ausgabe aufweist, welche direkt mit der Eingabe (105) der Modulationsstufe verbunden ist, und ihm das zu modulierende elektrische Signal (s(t)) direkt zugeführt wird, und wobei der AM-Modulator (102) eine Ausgabe aufweist, an welcher er ein Zwischensignal (s2(t)) erzeugt, welches als Eingabe dem FM-Modulator (103) zugeführt wird.

9. Vorrichtung (99) nach Anspruch 8, wobei das Zwischensignal (s2(t)), welches als Eingabe dem FM-Modulator (103) zugeführt wird, ein Signal ist, welches dazu angepasst ist, eine Variation der momentanen Frequenz zu verursachen, welche das Antriebssignal (v7(t), i7(t)) als die Ausgabe des FM-Modulators (103) verwendet.

10. Vorrichtung nach Anspruch 9, wobei die optische Übertragungsstufe (99) wenigstens eine Referenzfrequenz-Erzeugungsstufe (109) umfasst, wobei:

    - die Referenzfrequenz-Erzeugungsstufe (109) elektrisch mit einer Frequenz-Referenzeingabe des AM-Modulators (102) verbunden ist und wenigstens eine erste Referenzfrequenz (f0) für den AM-Modulator erzeugt, oder wobei
    - die Referenzfrequenz-Erzeugungsstufe (109) mittels einer ersten Ausgabe (109f) davon elektrisch mit einer Frequenz-Referenzeingabe des AM-Modulators (102) verbunden ist und ferner mittels einer zweiten Ausgabe (109s) davon elektrisch mit einer Frequenz-Referenzeingabe des FM-Modulators (103) verbunden ist und wenigstens eine erste Referenzfrequenz (f0) für den AM-Modulator (102) sowie eine zweite Referenzfrequenz (Fc) für den FM-Modulator (103) erzeugt.

11. Vorrichtung nach einem der vorhergehenden Ansprüche, umfassend eine optische Demodulationsstufe (201), welche aufweist:

    - eine Eingabe (205), welche dazu angepasst ist, während einer Verwendung ein Spannung- oder Strom-Antriebssignal (v7'(t), i7'(t)) zu empfangen, welches durch einen Lichtemitter (200), moduliert und erzeugt worden ist, welcher damit verbunden ist, und während einer Verwendung die optische Strahlung (108) zu empfangen, und
    - eine Ausgabe (207), welche ein Ausgabe-Reproduzierungssignal (s'(t)) überträgt, für welche das elektrische Signal (s(t)) ein Modulationssignal repräsentiert,

    und wobei zwischen der Eingabe und der Ausgabe der Demodulationsstufe (201) eine Kaskade aus einem ersten FM-Demodulator (203) und einem zweiten AM-Demodulator (202) vorhanden ist, wobei der FM-Demodulator (203) vorgelagert zu dem AM-Demodulator (202) angeordnet ist, wobei der AM-Demodulator (202) eine Eingabe aufweist, welche direkt mit der Ausgabe des FM-Demodulators (203) verbunden ist.

12. Vorrichtung nach einem der vorhergehenden Ansprüche, umfassend eine Datenverarbeitungseinheit, welche dazu eingerichtet ist, auf eine automatisierte Weise einen vorbestimmten Algorithmus durchzuführen, welcher das Signal, welches durch den einen oder die mehreren Lichtemitter (200) des Empfangsbereichs (302) empfangen worden ist, auf der Suche nach einem vorbestimmten Modulationsschema analysiert.

## Revendications

1. Dispositif optique (1) d'observation ayant un système de communication optique, ledit dispositif optique comprenant un corps pourvu d'au moins une lentille avant (2) adaptée durant l'utilisation pour au moins recevoir un rayonnement optique (108), et au moins une lentille arrière ou une lentille de sortie (3), placée en communication optique avec la lentille avant (2) précédemment mentionnée et adaptée durant l'utilisation pour permettre à un utilisateur de visualiser une partie ou une portion d'espace observée à travers ledit dispositif optique (1) le long au moins d'une direction principale d'observation définie par un premier axe d'observation (Y), dans lequel ledit rayonnement optique définit et/ou exécute un trajet optique prédéfini entre ladite lentille avant (2) et lesdites lentille arrière ou lentille de sortie (3) ;

ledit dispositif optique (1) comprenant un système de communication optique (10) intégré sur, ou à l'intérieur dudit corps, comprenant au moins un étage récepteur optique (199) et un étage transmetteur optique (99), dans lequel :

- ledit étage récepteur optique (199) est configuré pour produire, sur au moins une première sortie (10u, 10u') de celui-ci, un signal électrique de réplication (s'(t)) d'un signal de modulation d'un rayonnement optique (108r) modulé selon un schéma de modulation prédéfini ; et
- ledit étage transmetteur optique (99) est configuré pour produire, sur au moins une première sortie (10u, 10u") de celui-ci, un rayonnement optique (108r) transmis avec un schéma de modulation prédéfini basé sur un signal électrique (s(t)) de données, ledit système de communication optique (10) comprenant au moins une première entrée (10i) configurée pour recevoir le signal électrique (s(t)) de données, ledit signal électrique (s(t)) de données agissant comme signal de modulation pour ledit rayonnement optique ;

le dispositif optique (1) d'observation étant **caractérisé en ce que** ledit étage récepteur optique (199) dudit système de communication optique (10) comprend un système de réception (300) ayant un élément optiquement sensible (301) pourvu d'une zone de réception (302) de celui-ci et sur lequel une pluralité de photorécepteurs (200) est installée, chacun de ladite pluralité de photorécepteurs (200) étant capable de produire ledit signal électrique (s(t)) de réplication,

dans lequel ladite pluralité de photorécepteurs (200) atteint une zone de réception (302) adaptée pour acquérir au moins une image dans laquelle une variation d'intensité de rayonnement optique (Ir(t)) transmise par un photoémetteur modulé, selon le schéma de modulation prédéfini précédemment mentionné est présent, ledit système de réception (300) comprenant un moyen de sélection d'une partie de la zone de réception (302), configuré pour sélectionner automatiquement la partie de la zone de réception (302) dans laquelle la variation d'intensité de rayonnement optique (Ir(t)) transmise par le photoémetteur modulé est présente, éventuellement pour entraîner l'envoi d'un signal correspondant sensiblement à ladite variation d'intensité de rayonnement optique (Ir(t)) vers un étage démodulateur optique (201).

2. Dispositif selon la revendication 1, comprenant en outre au moins un élément d'agrandissement d'image, interposé entre ladite au moins une lentille avant (2) et ladite au moins une lentille arrière ou une lentille de sortie (3).

3. Dispositif selon la revendication 1 ou la revendication 2, dans lequel ledit étage transmetteur optique (99) est configuré pour transmettre ledit rayonnement optique (108t) avec une transmission directive orientée au moins le long d'un axe principal de transmission (X) parallèle audit premier axe d'observation (Y) et/ou dans lequel ledit étage récepteur optique (199) est configuré pour recevoir ledit rayonnement optique avec une fenêtre de réception directive orientée au moins le long d'un axe principal de réception (X) parallèle audit premier axe d'observation (Y).

4. Dispositif selon la revendication 1, dans lequel lesdits moyens de sélection sont des moyens et/ou des éléments comprenant au moins une configuration de fonctionnement pour pister ladite partie de la zone de réception (302) à l'intérieur de ladite zone de réception (302), dans lequel, durant ledit pistage, lesdits moyens peuvent et/ou sont configurés pour sélectionner des parties supplémentaires de la zone de réception (302) sous la forme de zones dans lesquelles rechercher ladite variation d'intensité de rayonnement optique (Ir(t)) suite à un mouvement dudit au moins un premier axe d'observation (Y).

5. Dispositif selon l'une quelconque des revendications précédentes, comprenant au moins un élément réfléchissant (P) interposé entre ladite lentille avant (2) et lesdites lentille arrière ou lentille de sortie (3), ledit élément réfléchissant (P) étant configuré pour sélectivement dévier un rayonnement optique (108r) reçu depuis une source externe en un premier faisceau (108r') dirigé vers lesdites lentille arrière ou lentille de sortie (3) le long d'une première direction et en un second faisceau (108r") dirigé vers ledit étage récepteur optique (199) le long d'une seconde direction différente de ladite première direction.

6. Dispositif selon l'une quelconque des revendications précédentes, comprenant au moins un élément réfléchissant (P) interposé entre ladite lentille avant (2) et lesdites lentille arrière ou lentille de sortie (3), ledit élément réfléchissant (P) étant configuré pour dévier sélectivement un rayonnement optique transmis par ledit étage transmetteur optique (99) uniquement vers ladite lentille avant (2) et comprenant un moyen de rejeter la transmission dudit rayonnement optique (108t) transmis depuis ledit étage transmetteur optique (99) vers lesdites lentille arrière ou lentille de sortie (3).

7. Dispositif selon l'une quelconque des revendications précédentes, dans lequel ledit schéma de modulation prédéfini est un schéma de modulation AM ou FM ou PWM, ou est un schéma comprenant une modulation d'amplitude et une modulation de fréquence.

8. Dispositif selon l'une quelconque des revendications précédentes, dans lequel ledit étage modulateur optique (99) comprend au moins un étage modulateur (101) comprenant :

     - une entrée (105) configurée pour recevoir durant l'utilisation un signal électrique (s(t)) à moduler, et
     - une sortie (107) transmettant, vers au moins un photoémetteur (100), un signal d'entraînement (v7(t), i7(t)) de tension ou de courant pour lequel ledit signal électrique (s(t)) représente un signal de modulation, où ledit au moins un photoémetteur (100) transmet et/ou est configuré pour transmettre un rayonnement optique (108) avec une intensité de rayonnement (Ir(t)) variable selon ledit signal d'entraînement (v7(t), i7(t)),

et dans lequel, entre ladite entrée et ladite sortie dudit étage modulateur (101) une cascade d'un premier modulateur AM (102) et d'un second modulateur FM (103) est présente, ledit modulateur FM (103) étant placé en aval dudit modulateur AM (102) et ayant sa sortie directement connectée à la sortie (107) dudit étage modulateur (101), dans lequel ledit modulateur AM (102) présente une entrée directement connectée à ladite entrée (105) dudit étage modulateur et est directement alimenté par ledit signal électrique (s(t)) à moduler et dans lequel ledit modulateur AM (102) présente une sortie sur laquelle il génère un signal intermédiaire (s2(t)) alimenté sous la forme d'une entrée audit modulateur FM (103).

9. Dispositif (99) selon la revendication 8, dans lequel ledit signal intermédiaire (s2(t)) alimenté comme une entrée audit modulateur FM (103) est un signal adapté pour amener une variation de la fréquence instantanée que ledit signal d'entraînement (v7(t), i7(t)) prend à la sortie dudit modulateur FM (103).

10. Dispositif selon la revendication 9, dans lequel ledit étage transmetteur optique (99) comprend au moins un étage de génération de fréquence de référence (109), dans lequel :

     - ledit étage de génération de fréquence de référence (109) est électriquement connecté à une entrée de référence de fréquence dudit modulateur AM (102) et génère au moins une première fréquence de référence (f0) pour ledit modulateur AM, ou dans lequel
     - ledit étage de génération de fréquence de référence (109) est électriquement connecté à une entrée de référence de fréquence dudit modulateur AM (102) à l'aide de sa première sortie (109f) et est en outre électriquement connecté à une entrée de référence de fréquence dudit modulateur FM (103) à l'aide d'une seconde sortie (109s) de celui-ci et génère au moins une première fréquence de référence (f0) pour ledit modulateur AM (102) et une seconde fréquence de référence (fc) pour ledit modulateur FM (103).

11. Dispositif selon l'une quelconque des revendications précédentes, comprenant un étage démodulateur optique (201) ayant :

     - une entrée (205) adaptée pour recevoir durant l'utilisation un signal d'entraînement (v7'(t), i7'(t)) de tension ou de courant modulé et généré à travers un photorécepteur (200) connecté à celui-ci et recevant durant l'utilisation ledit rayonnement optique (108), et
     - une sortie (207) transmettant un signal de réplication (s'(t)) de sortie pour lequel ledit signal électrique (s(t)) représente un signal de modulation,

et dans lequel, entre ladite entrée et ladite sortie dudit étage démodulateur (201) une cascade d'un premier démodulateur FM (203) et d'un second démodulateur AM (202) est présente, ledit démodulateur FM (203) étant placé en amont dudit démodulateur AM (202), dans lequel ledit démodulateur AM (202) présente une entrée directement connectée à la sortie dudit démodulateur FM (203).

12. Dispositif selon l'une quelconque des revendications précédentes, comprenant une unité de traitement de données configurée pour exécuter d'une manière automatisée un algorithme prédéterminé, qui analyse le signal reçu par lesdits un ou plusieurs photorécepteurs (200) de la zone de réception (302) effectuant une recherche d'un schéma de modulation de signal prédéterminé.

FIG.1

FIG.2

FIG.3

FIG.4

FIG.5

FIG.6

FIG.7

FIG.8

FIG.9

FIG.10

EP 3 729 164 B1

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1547494 A
- US 3277303 A
- US 5770850 A
- WO 02073835 A1